# EUROPÄISCHE PATENTSCHRIFT

(11) **EP 3 545 381 B1**
(45) Veröffentlichungstag und Bekanntmachung des Hinweises auf die Patenterteilung: **15.04.2020**
(21) Anmeldenummer: 18723666.6
(22) Anmeldetag: 26.04.2018
(51) Int. Cl.: B64C 39/02, G05D 1/10

(54) **UNBEMANNTES LUFTFAHRZEUG MIT EINER MODULAREN SCHWARMSTEUEREINHEIT**
UNMANNED AIRCRAFT WITH A MODULAR SWARM CONTROL UNIT
AÉRONEF SANS PILOTE ÉQUIPÉ D'UNE UNITÉ DE COMMANDE MODULAIRE DE VOL EN FORMATION

(30) Priorität: 28.04.2017 AT 5007617 U
(43) Veröffentlichungstag der Anmeldung: 02.10.2019
(73) Patentinhaber: Ars Electronica Linz GmbH & Co KG, 4040 Linz (AT)
(72) Erfinder: HÖRTNER, Horst, 4115 Kleinzell (AT)
(74) Vertreter: Röggla, Harald
(86) Internationale Anmeldenummer: PCT/AT2018/060082
(87) Internationale Veröffentlichungsnummer: WO 2018/195573

(56) Entgegenhaltungen:
- WO-A1-2013/002778
- US-A1- 2009 212 157
- US-A1- 2015 346 722
- AXEL BÜRKLE ET AL: "Towards Autonomous Micro UAV Swarms", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, Bd. 61, Nr. 1 - 4, 27. Oktober 2010 (2010-10-27), Seiten 339-353, XP019855703, ISSN: 1573-0409, DOI: 10.1007/S10846-010-9492-X

## Beschreibung

Die Erfindung betrifft ein unbemanntes Luftfahrzeug mit einer Antriebseinheit zum Ermöglichen des Fluges des Luftfahrzeugs im Luftraum und mit einer Flugsteuereinheit, die zum Empfangen von Steuerinformationen von einer Funkfernsteuerung oder zum Ansteuern von durch gespeicherte Positionsinformationen gekennzeichneten Positionen des Luftfahrzeugs im Luftraum ausgebildet ist, um die Flugbahn des Luftfahrzeugs zu steuern.

Bei der Darstellung von Kunst oder Information in der Unterhaltungsindustrie, bei öffentlichen und privaten Veranstaltungen beziehungsweise im Allgemeinen ist es oft wünschenswert, eine Abbildung im Luftraum bereitzustellen. Dies kann beispielsweise durch den Einsatz von Feuerwerkskörpern, das Ziehen eines Banners oder eines Displays durch ein Flugzeug, das Anstrahlen von Wasserfontänen mittels Licht, das Projizieren von Abbildungen auf ortsfeste Hochhausfassaden oder bei Flugvorführungen mittels Unterstützung von eingefärbtem Rauch erfolgen.

All die oben genannten beispielhaften Möglichkeiten zum Bereitstellen einer Abbildung im Luftraum weisen allgemeine und/ oder spezifische Nachteile auf. Folgend werden einige derartige Nachteile beispielhaft angeführt: Der Einsatz von Feuerwerkskörpern birgt ein Gefahrenpotential und hat negative Auswirkungen auf die Umwelt. Eine Flugshow birgt ein erhebliches Gefahrenpotential, ist äußerst kostspielig und die Flugzeuge bewegen sich grundsätzlich viel zu schnell, um komplexe oder informative Abbildungen zu ermöglichen. Beim Ziehen eines Banners sind die Nachteile ähnlich: Die Abbildung beziehungsweise Information am Banner ist statisch, lediglich zweidimensional und meist schlecht erkennbar. Das Anstrahlen von Wasserfontänen mittels Licht ist in seiner Höhe, Dreidimensionalität und Komplexität begrenzt. Keine dieser Lösungen ermöglicht es eine Abbildungen im Luftraum zu schaffen, die eine gewisse Mindestgröße aufweisen, im Wesentlichen abbildungsgleich wiederholbar, dynamisch, interaktiv und wiederverwendbar sind.

Die Entwicklung der letzten Jahre auf dem technischen Gebiet der unbemannten Luftfahrzeuge, im englischen Sprachgebrauch üblicherweise als "Unmanned Aerial Vehicle (UAV)" bezeichnet, insbesondere im Bereich der "Drohnen" beziehungsweise "Multicopter", haben dazu geführt, dass solche Luftfahrzeuge für die Bereitstellung derartiger Abbildungen im Luftraum zum Einsatz kommen.

So wurden beispielsweise bei der öffentlichen Musikveranstaltung "Klangwolke" am 01. September 2012 in Linz, Österreich, 49 "Quadcopter" zu einem dynamischen Schwarmverbund kombiniert, um dynamische Abbildungen und Visualisierungen im Luftraum darzustellen. Jeder Quadcopter wies einen Lichtdiffusions-Schirm auf und innerhalb dieses Schirms ein LED-Leuchtmittel. Somit bildete jeder Quadcopter einen "Bildpunkt" der Abbildung im Luftraum, einen sogenannten "SPAXEL".

Die Bereitstellung eines derartigen Schwarmverbunds mit UAVs löst folglich die Nachteile der oben genannten Möglichkeiten zum Bereitstellen einer Abbildung im Luftraum, ist jedoch sehr herausfordernd in Bezug auf die eingesetzte Technologie und das notwendige Know-how. Insbesondere muss die Hard- und Software jedes UAVs aufwändig entwickelt und regelmäßig angepasst werden, um den speziellen Anforderungen zur Anwendung in einem dynamischen Schwarmverbund zu genügen. Zusätzlich ist spezifisches Fachwissen und Erfahrung in Bezug auf das Flottenmanagement des Schwarmverbunds notwendig.

Der Erfindung liegt die Aufgabe zugrunde ein unbemanntes Luftfahrzeug bereitzustellen, welches die oben genannten Herausforderungen andressiert und die damit einhergehenden Nachteile zumindest vermindert. Weiters sollen in diesem Zusammenhang ökonomische Kriterien wie Zeitaufwand und Systemkosten, aber auch die Technik zur Ermöglichung des Schwarmflugs verbessert werden.

Erfindungsgemäß wird diese Aufgabenstellung dadurch gelöst, dass eine modulare Schwarmsteuereinheit vorgesehen ist, die eine erste Schnittstelle zu der Flugsteuereinheit und eine zweiten Funkschnittstelle zu einer Bodenschwarmsteuereinheit oder zu Schwarmsteuereinheiten anderer Luftfahrzeuge aufweist, wobei die Schwarmsteuereinheit Signalerzeugungsmittel zum Erzeugen oder Sendemittel zum Senden von, der Funkfernsteuerung entsprechenden Steuerinformationen aufweist und über die erste Schnittstelle zum Abgeben von, für den Schwarmflug von zumindest zwei Luftfahrzeugen relevanten Schwarmsteuerinformationen an die Flugsteuereinheit ausgebildet ist.

Durch die erfindungsgemäße modulare Schwarmsteuereinheit, die vorteilhaft in/ an ein unbemanntes Luftfahrzeug handelsüblicher Bauart, insbesondere eine handelsübliche Drohne, integrierbar/ anbringbar ist, ist es unter anderem erstmals möglich, mit Luftfahrzeugen handelsüblicher Bauart einen dynamischen Schwarmverbund für Abbildungen im Luftraum bereitzustellen. Das Luftfahrzeug benötigt lediglich die technische Funktionalität mittels der Flugsteuereinheit die Antriebseinheit zu steuern. Sämtliche anderen Funktionen, die für den Flug des/der Luftfahrzeuge und/ oder den Schwarmflug eines Schwarms beziehungsweise eines Schwarmverbunds notwendig und vorteilhaft sind, werden von der Schwarmsteuereinheit übernommen und gegebenenfalls entsprechend an die Flugsteuereinheit übermittelt. So werden beispielsweise die Steuerinformationen einer (handelsüblichen manuellen) Funkfernsteuerung übermittelt oder simuliert. Die Hard- und Software der modularen Schwarmsteuereinheit können unabhängig von den Luftfahrzeugen gefertigt, entwickelt und/ oder laufend verbessert werden, was ein weiterer großer Vorteil in Bezug auf die zuvor genannten Herausforderungen und Kriterien ist.

Zweckmäßig ist die erste Schnittstelle durch eine kabelgebundene Schnittstelle mit den Signalerzeugungsmitteln zum Erzeugen der, der Funkfernsteuerung entsprechenden Steuerinformationen, ausgebildet. Hierdurch wird eine sehr sichere, störungsresistente Verbindung zwischen der Schwarmsteuereinheit und der Flugsteuereinheit ermöglicht. Zweckmäßig kommuniziert die Schwarmsteuereinheit über die kabelgebundene Schnittstelle mit der Funksteuereinheit entsprechend einem der folgenden Protokolle oder Konzepte: Micro Air Vehicle Communication Portocol; CAN-Bus Protocol; I2C; UART Anbindung; Emulation der Funkfernsteuerung.

Zweckmäßig ist die erste Schnittstelle als erste Funkschnittstelle mit den Sendemitteln zum Senden der, der Funkfernsteuerung entsprechenden Steuerinformationen ausgebildet. Hierdurch kann beispielsweise eine möglichst einfache Integration oder ein möglichst einfaches Abringen der Schwarmsteuereinheit mit/ an dem Luftfahrzeug realisiert werden. In einer vorteilhaften Ausgestaltung weist die Schwarmsteuereinheit Positionsbestimmungsmittel zum Überwachen auf, ob sich das Luftfahrzeug in einer vordefinierten Flugzone aufhält, wobei die Schwarmsteuereinheit zum Abgeben einer Schwarmsteuerinformation zur Vorgabe einer geänderten Flugbahn oder zur Korrektur der geplanten Flugbahn des Luftfahrzeugs an die Flugsteuereinheit ausgebildet ist, wenn Gefahr besteht, dass das Luftfahrzeug die vordefinierte Flugzone verlässt. Hierdurch kann unter anderem die Sicherheit des Systems erhöht werden, indem beispielsweise verhindert wird, dass die Luftfahrzeuge eine Flugsicherheitszone, die als sicher in Bezug auf etwaige Betrachter oder zufällige Passanten definiert ist, verlassen oder eine Grenze maximaler Kommunikationsreichweite überfliegen. Diesbezüglich kann in einer besonders vorteilhaften Ausgestaltung die Schwarmsteuereinheit nach Empfang eines Sonderflugbefehls oder eines Heimkehrbefehls über die zweite Funkschnittstelle von der Bodenschwarmsteuereinheit zum Abgeben einer Schwarmsteuerinformation zur Vorgabe einer geänderten Flugbahn oder zur Korrektur der geplanten Flugbahn des Luftfahrzeugs an die Flugsteuereinheit ausgebildet sein, um das Luftfahrzeug entlang einer vordefinierten Sonderflugbahn oder an eine vordefinierte Heimkehr-Landeposition zu steuern.

In einer weiteren vorteilhaften Ausgestaltung weist die Schwarmsteuereinheit Zeitmessmittel zum Ermitteln der Zeitdauer aufweist, während der keine ausreichende Funkverbindung zur Bodenschwarmsteuereinheit gegeben war, wobei die Schwarmsteuereinheit bei Überschreitung einer Maximalzeitdauer zum Abgeben einer Schwarmsteuerinformation zur Vorgabe einer geänderten Flugbahn oder zur Korrektur der geplanten Flugbahn des Luftfahrzeugs an die Flugsteuereinheit ausgebildet ist, um das Luftfahrzeug innerhalb einer vordefinierten Flugzone beziehungsweise ohne Überflug einer vordefinierten Sperrzone an eine vordefinierte Heimkehr-Landeposition zu steuern. Auf diese Weise kann die Ausfallssicherheit des Systems erhöht werden, wobei die Luftfahrzeuge selbständig zu einem vordefinierten Landeplatz fliegen, wenn die Funk- bzw. Steuerverbindung zur Bodenschwarmsteuerneinheit über die Maximalzeitdauer hinaus unterbrochen war.

In einer vorteilhaften Ausgestaltung sind in der modularen, in einem Gehäuse vorgesehenen Schwarmsteuereinheit ein oder mehrere der folgenden Zusatzeinheiten vorgesehen: LED-Leuchtmittel; LASER-Leuchtmittel; Lichtreflektor; Feuerwerksabschusseinrichtung; Raucherzeugungsmittel; Anzeigemittel; Lautsprecher; Mikrofon; optischer Sensor, insbesondere Kamera; Bilderkennungseinheit; Abstandssensor; Temperatursensor; Feuchtigkeitssensor; Transporteinheit. Hierdurch kann das Luftfahrzeug unter anderem sehr einfach und variabel an seinen Einsatzweck angepasst werden.

Zweckmäßig ist das Luftfahrzeug als Drohne, insbesondere als Multicopter, ausgebildet. Hierdurch ergeben sich unter anderem Vorteile in Bezug auf Verfügbarkeit, Anschaffungs- und Anpassungskosten, Variabilität, usw. Dabei ist es unerheblich, ob einheitliche Drohnen oder Drohnentypen für den Schwarm (homogener Schwarm) zum Einsatz kommen, oder der Schwarm aus einer Vielzahl völlig unterschiedlicher Drohnen oder Drohnentypen (heterogener Schwarm) besteht.

Die Erfindung stellt außerdem ein System zum Steuern von zumindest zwei unbemannten Luftfahrzeugen in einem Schwarm bereit, wobei Luftfahrzeuge mit erfindungsgemäßen modularen Schwarmsteuereinheiten und gegebenenfalls einer Bodenschwarmsteuereinheit im System vorgesehen sind, wobei die Bodenschwarmsteuereinheit über die zweiten Funkschnittstellen der Schwarmsteuereinheiten der Luftfahrzeuge und deren erste Schnittstellen zum Kommunizieren mit den Flugsteuereinheiten der Luftfahrzeuge ausgebildet ist und/oder die modularen Schwarmsteuereinheiten untereinander über die zweiten Funkschnittstellen zum Kommunizieren ausgebildet sind. Hierdurch können die Luftfahrzeuge unter anderem mittels dynamischem Schwarmflug, mit oder ohne Anwendung einer Bodenschwarmsteuereinheit, besonders komplexe und große Abbildungen darstellen. Vorteilhaft können hierbei zwei Luftfahrzeuge unterschiedlicher Bauart, die jeweils eine modulare Schwarmsteuereinheit aufweisen, in dem System zum Schwarmflug vorgesehen sein. Die Vielfalt der Abbildungen im Luftraum kann so beispielsweise erhöht werden.

Besonders vorteilhaft kann zusätzlich zumindest ein Vehikel zur landgebundenen Bewegung, insbesondere ein Auto oder ein Roboter, oder zumindest ein Vehikel zur wassergebundenen Bewegung, insbesondere ein Schiff oder Unterseeboot, oder auch andere Typen von Luftfahrzeugen, beispielsweise ein Zeppelin, ein Starrflügler oder ein Nurflügler, mit der mobilen Schwarmsteuereinheit zum Kommunizieren mit der Bodenschwarmsteuereinheit und/oder den Schwarmsteuereinheiten der Luftfahrzeuge, bodengebunden im Schwarm mit im System vorgesehenen Luftfahrzeugen im Schwarmflug vorgesehen sein. Hierdurch kann die Vielfalt der Abbildungen noch weiter erhöht werden, beispielsweise können die Luftfahrzeuge im Luftraum den bodengebundenen Bewegungen des Autos folgen oder vice versa.

Zweckmäßig sind die Luftfahrzeuge durch handelsübliche, zum Einzelflug hergestellte Luftfahrzeuge, insbesondere durch Multicopter, gebildet. Hierdurch kann das System kostengünstig angeschafft und gegebenenfalls erweitert und besonders einfach und technisch zuverlässig für den Schwarmflug angepasst werden. Die erfindungsgemäße modulare Schwarmsteuereinheit wird entsprechend in jedes Luftfahrzeug, Landfahrzeug oder Wasserfahrzeug integriert oder angebracht. Besonders zweckmäßig ist hierbei die erfindungsgemäße Schwarmsteuereinheit modular in einem Gehäuse vorgesehen.

Im Folgenden werden das erfindungsgemäße Luftfahrzeug und das erfindungsgemäße System in nicht einschränkender Weise anhand von, in den Zeichnungen dargestellten beispielhaften Ausgestaltungen näher erläutert.
Figur 1 zeigt in einer perspektivischen schematischen Ansicht ein unbemanntes Luftfahrzeug gemäß einer ersten Ausgestaltung der Erfindung.
Figur 2 zeigt in einer Ansicht von oben ein System mit einer Mehrzahl unbemannter Luftfahrzeuge gemäß Figur 1.
Figur 3 zeigt in einer perspektivischen schematischen Ansicht ein System mit einer Mehrzahl unbemannter Luftfahrzeuge gemäß einer weiteren Ausgestaltung der Erfindung.

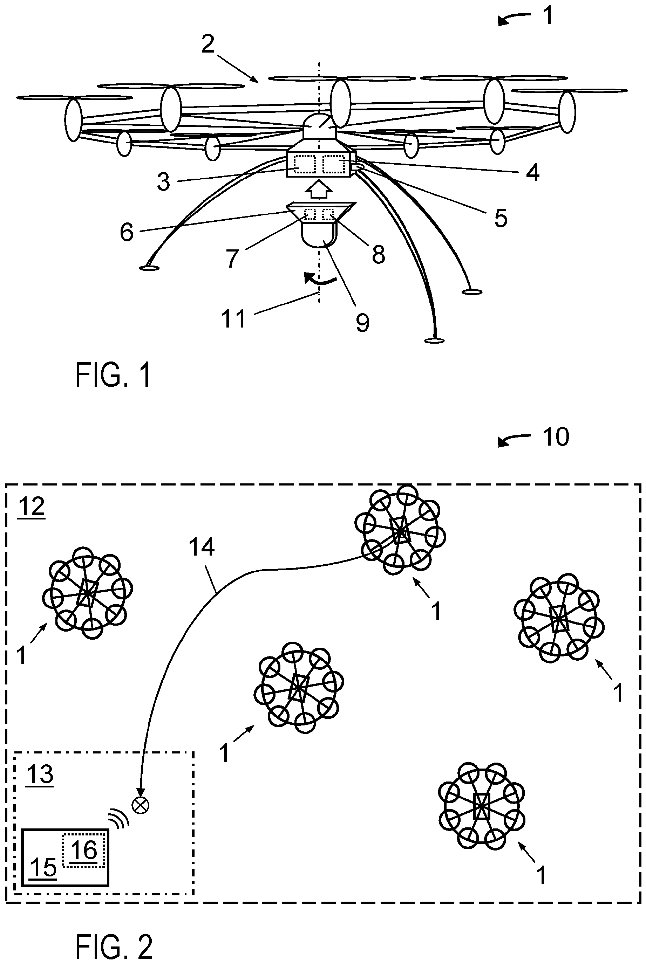

Figur 1 zeigt ein unbemanntes Luftfahrzeug 1 gemäß einer ersten Ausgestaltung der Erfindung. Das Luftfahrzeug 1 kann dabei als handelsübliche, zum Einzelflug hergestellte Drohne, genauer bezeichnet als sogenannter "Oktocopter" ausgeführt sein. Diesbezüglich ist eine Antriebseinheit 2 des Luftfahrzeugs 1 aus acht Rotoreinheiten gebildet, die beispielsweise mittels acht Elektromotoren angetrieben werden. Die Antriebseinheit 2 ermöglicht den Flug des Luftfahrzeugs 1 im Luftraum.

Ein "Okotocopter" ist eine Variante eines "Multicopters" mit acht Rotoreinheiten. Das Luftfahrzeug 1 kann alternativ als eine andere Variante eines Multicopters ausgebildet sein, beispielsweise als handelsüblicher "Quadcopter" mit vier Rotoreinheiten, usw., wobei im Wesentlichen jede Anzahl von Rotoreinheiten möglich ist. Das unbemannte Luftfahrzeug 1 kann aber auch ein beliebiges, als ein, in seiner Position im Luftraum, stabilisierbares Luftfahrzeug, ausgebildet sein (etwa Zeppelin, Ballon, uvam). Ebenso wäre es möglich Modellflugzeuge mit im Schwarm fliegen zu lassen.

Der Begriff "Luftraum" bezieht sich dabei auf jeden möglichen Raum oberhalb eines künstlichen oder natürlichen Bodens innerhalb oder außerhalb eines künstlichen oder natürlichen Raumes beziehungsweise Gebäudes.

Das Luftfahrzeug 1 weist weiters eine Flugsteuereinheit 3 auf, die zum Ansteuern der Antriebseinheit 2, also der Rotoreinheiten, des Luftfahrzeugs 1 im Luftraum ausgebildet ist, um die Flugbahn des Luftfahrzeugs 1 zu steuern. Die Flugsteuereinheit 3 empfängt die Steuerinformationen von einer von einem Benutzer manuell bedienten Funkfernsteuerung (nicht dargestellt) oder einer in Figur 2 dargestellten Bodenschwarmsteuereinheit 15. Das Luftfahrzeug 1 benötigt folglich keine weitere technische Funktionalität und/ oder "Intelligenz" um eine Flugbahn im Luftraum auszuführen.

Die Funkfernsteuerung kann eine handelsübliche Funkfernsteuerung sein, die gemeinsam mit dem Luftfahrzeug 1 verkauft wurde. Alternativ kann auch ein handelsüblicher Computer, ein Laptop-Computer, ein Tablet-Computer, ein Smartphone, usw. benutzt werden. Mit der Flugsteuereinheit 3 ist es somit möglich das Luftfahrzeug 1 mit einer bestimmten Fluggeschwindigkeit an eine bestimmte Position im Luftraum zu steuern. Hierzu werden die Rotoren der Antriebseinheit 2 von der Flugsteuereinheit 3 entsprechend gesteuert.

Zusätzlich weist das erfindungsgemäße Luftfahrzeug 1 eine modulare Schwarmsteuereinheit 6 auf, die modular in einem Gehäuse vor Witterungseinflüssen geschützt untergebracht ist. Die erfindungsgemäße modulare Schwarmsteuereinheit 6 kann an das handelsübliche, zum Einzelflug hergestellte Luftfahrzeug 1, insbesondere an die handelsübliche Drohne, angekoppelt werden. Die Schwarmsteuereinheit 6 ist hierfür entlang des in Figur 1 dargestellten Pfeils an dem Luftfahrzeug 1 anbringbar und gegebenenfalls von diesem auch wieder abnehmbar ausgebildet. Dies kann mittels jeder Art von lösbarer oder unlösbarer Befestigung durchführbar sein, beispielsweise durch eine Steck-, Klebe-, oder Schraubverbindung. Alternativ kann die Schwarmsteuereinheit 6 in ein einteiliges Gehäuse des Luftfahrzeugs 1 eingebracht werden, beispielsweise zugänglich über eine Abdeckung.

Die modulare Schwarmsteuereinheit 6 weist eine erste Schnittstelle 7 zu der Flugsteuereinheit 3 und eine zweite Funkschnittstelle 8 auf. Weiters weist die Schwarmsteuereinheit 6 Positionsbestimmungsmittel 9, beispielsweise einen GPS-Empfänger auf, wodurch die aktuellen Positionsinformationen ermittelt werden. Die erste Schnittstelle 7 ist gemäß dem in Figur 1 dargestellten Ausführungsbeispiel durch eine kabelgebundene Schnittstelle gebildet. Die Positionsinformationen sind in der Schwarmsteuereinheit 6 gespeichert oder werden von dieser von der in Figur 2 dargestellten Bodenschwarmsteuereinheit 15 empfangen. Die Positionsinformationen können von der Schwarmsteuereinheit 6, gegebenenfalls mittels der Speichereinheit 4, aufgezeichnet werden. Die Positionsinformationen können optional oder zusätzlich im Wesentlichen in Echtzeit von der Schwarmsteuereinheit 6 errechnet werden.

Alternativ können diese aktuellen Positionsinformationen auch von einem bereits in der Flugsteuereinheit 3 verbautem Positionsbestimmungsmittel, beispielsweise einem GPS-Empfänger, über die erste Schnittstelle 7 übertragen werden.

Alternativ oder zusätzlich können die Positionsinformationen in einer Speichereinheit 4 gespeichert sein, wobei die Schwarmsteuereinheit 6 die Positionsinformationen von der Speichereinheit 4 empfängt. Zusätzlich kann die Schwarmsteuereinheit 6 die aktuellen Positionsinformationen auf die Speichereinheit 4 übermitteln, wo sie gespeichert werden, beispielsweise zur Kontrolle oder als Backup.

Die Flugsteuereinheit 3 des handelsüblichen Luftfahrzeugs 1 weist einen Funkempfänger zum Empfang von Steuerinformationen der mit dem Luftfahrzeug 1 verkauften Funkfernsteuerung auf, der mittels Steckverbindung an einer Schaltplatine der Flugsteuereinheit 3 befestigt ist. Gemäß diesem Ausführungsbeispiel der Erfindung wird zur Ankopplung der Schwarmsteuereinheit 6 der Funkempfänger abgesteckt und gegebenenfalls entfernt und anstatt des Funkempfängers die Schwarmsteuereinheit 6 an die Steckverbindung angesteckt. Die Schwarmsteuereinheit 6 weist nun Signalerzeugungsmittel zum Erzeugen von der Funkfernsteuerung und insbesondere von dem Funkempfänger entsprechenden Steuerinformationen auf, wodurch die Schwarmsteuereinheit 6 die Flugsteuereinheit 3 des Luftfahrzeugs 1 so ansteuert, als wenn die Steuerinformationen von dem Funkempfänger der handelsüblich vorgesehenen Funkfernsteuerung kommen würden. Auf diese Weise kann die Schwarmsteuereinheit 6 Schwarmsteuerinformationen kabelgebunden über die ersten Schnittstelle 7 an die Flugsteuereinheit 3 abgeben.

Die Schwarmsteuereinheit 6 ermittelt beispielsweise die Differenz zwischen aktueller Position und geplanter Zielposition, beispielsweise die gespeicherte Positionsinformation des entsprechenden Luftfahrzeugs 1, und wandelt eine Positionsabweichung in Steuersignale um, die von der Flugsteuereinheit 3 entgegengenommen werden können, und sendet diese Steuersignale über die erste Schnittstelle 7 an die Flugsteuereinheit 3, die diese Steuersignale entsprechend an die Antriebseinheit 2 weiterleitet. Dadurch wird das Luftfahrzeug 1 entlang der entsprechenden Flugbahn zur Zielposition bewegt.

Mittels der Schwarmsteuereinheit 6 ist es somit bei der beispielhaften Ausgestaltung möglich, das Luftfahrzeug 1 über den Kommunikationsweg Bodenschwarmsteuereinheit 15 → Schwarmsteuereinheit 6 → Flugsteuereinheit 3 im Luftraum zu steuern, insbesondere in einem Schwarmverbund. Hierbei kann die Flugbahn des Luftfahrzeugs 1 mittels der Bodenschwarmsteuereinheit 15 durch Schwarmsteuerinformationen an die Flugsteuereinheit 3 jederzeit korrigiert bzw. "überstimmt" werden, also aufgehoben und überschrieben werden, falls dies notwendig oder wünschenswert ist. Ebenso kann je nach Festlegung der Prioritäten die gegebenenfalls durch die Bodenschwarmsteuereinheit 15 übermittelte Flugbahn mittels der Schwarmsteuereinheit 6 jederzeit korrigiert bzw. überstimmt werden, falls dies notwendig ist um beispielsweise sicherzustellen, dass eine Sperrzone nicht überfolgen wird. So kann die Flugbahn des Luftfahrzeugs 1 durch die Bodenschwarmsteuereinheit 15 und/ oder die Schwarmsteuereinheit 6 jederzeit im Wesentlichen in Echtzeit angepasst werden, insbesondere wenn dies die Sicherheit und/ oder die Schwarmintelligenz erfordert.

Zur Vermeidung von Kollisionen kann entweder eine Kollisionsprüfung mit der Bodenschwarmsteuereinheit 15 oder bereits im Vorfeld vor dem Speichern der Flugbahnen durchgeführt werden, oder es werden Kollisionsvermeidungen während des Fluges der Luftfahrzeuge 1 durchgeführt, indem die Schwarmsteuereinheiten 6 das Feedback zusätzlich an der Schwarmsteuereinheit 6 verbauter Sensoren mitberücksichtigen.
Alternativ kann das Luftfahrzeug 1 weiters eine Flugsteuereinheit 3 aufweisen, die zum Ansteuern von durch gespeicherte Positionsinformationen gekennzeichneten Positionen des Luftfahrzeugs 1 im Luftraum ausgebildet ist, um die Flugbahn des Luftfahrzeugs 1 zu steuern. Die Positionsinformationen sind dann in einer Speichereinheit 4 der Flugsteuereinheit 3 oder in einer separaten Speichereinheit 4 gespeichert. Die Flugsteuereinheit 3 empfängt die Positionsinformationen von der Speichereinheit 4 und kann zusätzlich die aktuellen Positionsinformationen auf die Speichereinheit 4 übermitteln, wo sie gespeichert werden, beispielsweise zur Kontrolle oder als Backup. Jedoch wird, auch wenn das Luftfahrzeug 1 zum Ansteuern von durch gespeicherte Positionsinformationen gekennzeichneten Positionen ausgebildet ist, die Flugbahn anhand der entsprechenden Steuerinformationen abgeflogen, die die Flugsteuereinheit 3 von der Schwarmsteuereinheit 6 erhält. Dabei kommen die Steuerinformationen entweder von einer Bodenstation, insbesondere einer Bodenschwarmsteuereinheit 15, oder direkt von der Schwarmsteuereinheit 6. Die Steuerinformationen werden entweder über ein Protokoll übermittelt oder es werden die Steuerinformationen der (manuellen) Funkfernsteuerung simuliert. Zum Beispiel wird ein durch die (manuelle) Funkfernsteuerung nach "rechts" bewegtes Luftfahrzeug 1 durch die Schwarmsteuereinheit 6 so lange nach rechts bewegt, bis die Schwarmsteuereinheit 6 bemerkt, dass die Zielposition erreicht ist und die Schwarmsteuereinheit 6 auf "Position halten" schaltet, wobei die Flugsteuereinheit 3 die Antriebseinheit 2 entsprechend den Vorgaben der Schwarmsteuereinheit 6 ansteuert.

Die Positionsinformationen sind beispielsweise "Global Positioning System (GPS)"-basierte, dreidimensionale Koordinaten im Luftraum, also beispielsweise Daten im GPS Exchange Format (GPX). Die Daten im GPX-Format können Geodaten, also die geografischen Koordinaten Breite, Länge und Höhe, beinhalten. Das Luftfahrzeug 1 insbesondere die Schwarmsteuereinheit 6 und/ oder die Flugsteuereinheit 3 weist/ en diesbezüglich weiters einen GPS-Empfänger 5 auf. Alternativ können die Daten auch auf dem Galileo-, GLONASS-, Beidou/Compass- oder jedem weiteren Satellitennavigations- und/ oder Zeitgebungssystem oder auf einem lokalen oder gebäudebasierten Navigationssystem zur Positionsbestimmung des Luftfahrzeuges 1 innerhalb und außerhalb von Gebäuden basieren (etwa Positionsbestimmung durch Übermittlung von Sendesignalen, Optische Positionsbestimmungssysteme etc.).

Die Flugbahn des Luftfahrzeuges 1 entspricht einer zeitlichen Abfolge von Positionen, die ebenfalls Daten im GPX-Format sein können. Das Ausmaß der zeitlichen Abfolge bestimmt die Fluggeschwindigkeit des Luftfahrzeugs 1. Vorteilhaft ist insbesondere die zeitliche Abfolge von Positionen auch zur Laufzeit des Systems, beispielsweise durch die Interaktion eines Benutzers, abzuändern, oder neue Positionen eines oder mehrerer Luftfahrzeuge aus der Interaktion des Benutzers abzuleiten. Dabei ist es unwesentlich in welcher Art die Interaktion des Benutzers dem System übermittelt wird.

Die Funkfernsteuerung kann eine Vorrichtung sein, die speziell für die Kommunikation zwischen einer (zentralen) (Boden)-Station und vielen mobilen Stationen (1:n) ausgelegt ist, wobei deren Protokoll für eine derartige Kommunikation im Schwarm oder Schwarmverbund zugeschnitten ist. In der vorliegenden beispielhaften Ausgestaltung würde die Funkfernsteuerung die Kommunikation zwischen der Bodenschwarmsteuereinheit 15 und den Schwarmsteuereinheiten 6 der Luftfahrzeuge 1 zur Verfügung stellen. Alternativ kann auch jede Schwarmsteuereinheit 6 mit jeder Schwarmsteuereinheit 6 direkt kommunizieren (n:m), wobei sich in diesem Fall das Protokoll entsprechend vom vorhergehenden unterscheidet. Vorteilhaft ist hierbei eine Ausführung, bei der die Funkstrecke im Bezug auf Bandbreite und Frequenz dieselbe bleiben kann.

Alternativ kann die erste Schnittstelle 7 auch als erste Funkschnittstelle ausgebildet sein, wobei die Schwarmsteuereinheit Sendemittel zum Senden von, der handelsüblichen mit dem Luftfahrzeug verkauften Funkfernsteuerung entsprechenden Steuerinformationen aufweist. In diesem Fall wird der Funkempfänger der Flugsteuereinheit nicht von der Steckverbindung der Schaltplatine der Flugsteuereinheit abgesteckt, sondern als Funkempfänger für die von den Sendemitteln der Schwarmsteuereinheit gesendeten Schwarmsteuerinformationen verwendet. Die Flugsteuermittel verhalten sich daher, als ob die empfangenen Steuerinformationen von einer, von einem Piloten betriebenen Funkfernsteuerung gesendet würden, wobei diese tatsächlich von der in unmittelbarer Nähe angebrachten Schwarmsteuereinheit 6 stammen. Hierdurch ist eine gute und sichere Funkverbindung erhalten, wobei die Möglichkeit das Luftfahrzeug mit der gekauften Funkfemesteuerung zu fliegen erhalten bleiben kann.

Gemäß einem weiteren Ausführungsbeispiel der Erfindung kann die kabelgebundene erste Schnittstelle auch durch eine, gemäß einem Standard definierte Schnittstelle realisiert werden, welche beispielsweise gemäß folgenden Protokollen kommuniziert: Micro Air Vehicle Communication Portocol; CAN-Bus Protocol. Dies ist insbesondere dann sinnvoll, wenn das handelsübliche Luftfahrzeug 1 bereist eine solche Schnittstelle zur Flugsteuereinheit aufweist.

Während sich das Luftfahrzeug 1 in einer stabilen, im Wesentlichen statischen Position im Luftraum befindet, ist eine Symmetrieachse 11 des Luftfahrzeugs im Wesentlichen lotrecht ausgerichtet. Die Ausrichtung des Luftfahrzeugs 1 im Luftraum um die Symmetrieachse 11 und/oder um eine in diesem Fall im Wesentlichen horizontale Schwenkachse (nicht dargestellt), die folglich im Wesentlichen normal auf die Symmetrieachse 11 steht, erfolgt beispielsweise mittels der Antriebseinheit 2. Alle Ausrichtungen um die Symmetrieachse 11 und die Schwenkachse sind möglich.

Figur 2 zeigt beispielhaft ein System 10, bestehend aus einer Mehrzahl unbemannter Luftfahrzeuge 1 gemäß der in Figur 1 dargstellten ersten Ausgestaltung und der Bodenschwarmsteuereinheit 15.

Die Schwarmsteuereinheiten 6 der Luftfahrzeuge 1 sind über deren erste Schnittstellen 7 zum Kommunizieren mit den Flugsteuereinheiten 3 entsprechend der zuvor gemachten Beschreibung ausgebildet. Die Bodenschwarmsteuereinheit 15 ist über eine Bodenschwarmsteuerkommunikationseinheit 16 und über die zweiten Funkschnittstellen 8 der Schwarmsteuereinheiten 6 zum Kommunizieren mit den Schwarmsteuereinheiten 6 ausgebildet. So können die Luftfahrzeuge 1 mittels der Bodenschwarmsteuereinheit 15 in einem Schwarmverbund gesteuert und bewegt werden. Hierbei kann es beispielsweise vorteilhaft ausreichen, nur ein bis fünf Luftfahrzeuge 1 zu steuern, um eine große Menge, beispielweise 100 und mehr, an Luftfahrzeugen 1 zu bewegen, da alle übrigen Luftfahrzeuge 1 den gesteuerten Luftfahrzeugen 1 auf der Grundlage von Schwarmintelligenz folgen. Hierdurch kann die notwendige Menge an übermittelten Informationen stark reduziert werden.

"Schwarmintelligenz" bedeutet in diesem Zusammenhang spezifische Vorteile des Schwarmverbundflugs, insbesondere die kollektive Bewegung mehrerer Individuen, in diesem Fall mehrerer Luftfahrzeuge 1, im Schwarm anhand der Bewegung einzelner Weniger und/ oder die ständige Anpassung der Abstände der einzelnen Individuen, in diesem Fall der einzelnen Luftfahrzeuge 1, in gegenseitiger Abhängigkeit der am nächsten benachbarten Individuen. "Schwarmflug" bedeutet in diesem Zusammenhang das Vermögen des Systems aus Bodenschwarmsteuereinheit 15 und einer Vielzahl von Schwarmsteuereinheiten 6, die mit den Schwarmsteuereinheiten 6 ausgerüsteten Luftfahrzeuge 1 automatisiert und möglichst kollisionsfrei durch einen gemeinsamen (Luft-) Raum zu bewegen.

Optional können die Luftfahrzeuge 1 mittels der modularen Schwarmsteuereinheiten 6 über die zweiten Funkschnittstellen 8 zusätzlich auch untereinander kommunizieren, wobei die Schwarmsteuereinheit 6 über die erste Schnittstelle 7 zum Abgeben von, für den Schwarmflug der Luftfahrzeuge 1 relevanten Schwarmsteuerinformationen an die jeweilige Flugsteuereinheit 3 ausgebildet ist. Hierdurch können, beispielsweise mit Hilfe von Abstandssensoren, die an den Schwarmsteuereinheiten 6 angebracht sind, die Luftfahrzeuge 1 zum Beispiel auf Basis der oben beschriebenen Schwarmintelligenz bewegt werden.

Es sind eine Flugzone 12 und ein Heimkehr-Landeposition 13, beispielsweise durch Raumkoordinaten, insbesondere GPS-Koordinaten in Breiten- und Längengraden und Höheninformation, definiert, wobei sich die Flugzone virtuell im Wesentlichen senkrecht nach oben erstreckt und durch eine Maximalflughöhe der Luftfahrzeuge 1 nach oben oder durch die Höhenvorgabe des Betreibers begrenzt ist. Durch die Positionsbestimmungsmittel 9 der Schwarmsteuereinheit 6 kann so überwacht werden, ob sich das Luftfahrzeug 1 in der vordefinierten Flugzone 12 aufhält. Die Schwarmsteuereinheit 6 ist zum Abgeben einer Schwarmsteuerinformation zur Vorgabe einer geänderten Flugbahn des Luftfahrzeugs 1 an die Flugsteuereinheit 3 ausgebildet, wenn Gefahr besteht, dass das Luftfahrzeug 1 die vordefinierte Flugzone 12 verlässt.

Eine derartige Situation ist in Figur 2 für das am weitesten oben abgebildete Luftfahrzeug 1 dargestellt, wobei die nachfolgende Sequenz im Wesentlichen in Echtzeit durchgeführt wird: Die Schwarmsteuereinheit 6 registriert anhand der Positionsbestimmungsmittel 9 und der aktuellen und/ oder gespeicherten Flugbahn des Luftfahrzeugs 1, dass das Luftfahrzeug 1 die vordefinierte Flugzone 12 zu verlassen droht. Dies kann beispielsweise durch eine starke Windböe erflogen, die das Luftfahrzeug 1 in Richtung aus der vordefinierten Flugzone 12 treibt. Die Schwarmsteuereinheit 6 sendet diese Information an die Bodenschwarmsteuereinheit 15, welche einen Sonderflugbefehl, beziehungsweise einen Heimkehrbefehl, an die Schwarmsteuereinheit 6 sendet. Die Schwarmsteuereinheit 6 gibt nach Empfang dieses Heimkehrbefehls eine geänderte Flugbahn des Luftfahrzeugs 1 an die Flugsteuereinheit 3 ab, um so das Luftfahrzeug 1 entlang einer vordefinierten Sonderflugbahn 14 an die vordefinierte Heimkehr-Landeposition 13 zu steuern.

Optional kann die Schwarmsteuereinheit 6 zusätzlich Zeitmessmittel zum Ermitteln der Zeitdauer aufweisen, während der keine ausreichende Funkverbindung zur Bodenschwarmsteuereinheit 15 gegeben war, wobei die Schwarmsteuereinheit 6 bei Überschreitung einer Maximalzeitdauer die Flugbahn des Luftfahrzeugs 1 korrigiert, um das Luftfahrzeug 1 innerhalb der vordefinierten Flugzone 12, gegebenenfalls ohne Überflug einer vordefinierten Sperrzone, an die Heimkehr-Landeposition 13 zu steuern.

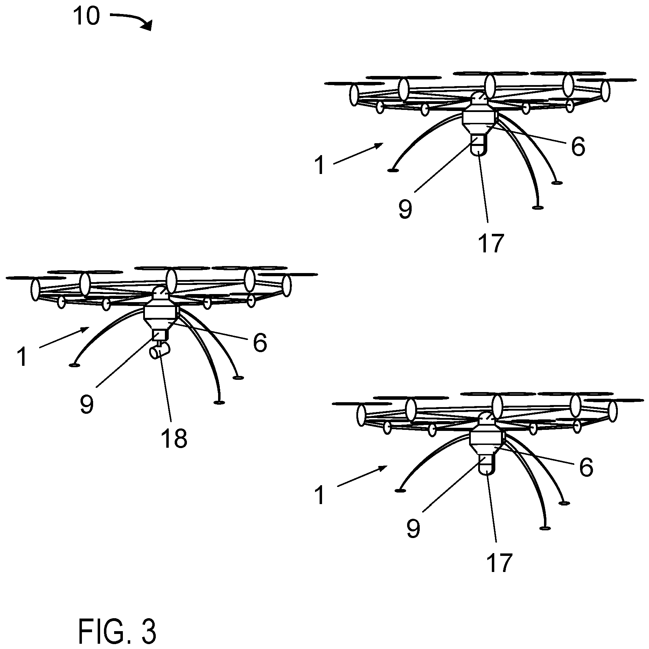

Die Luftfahrzeuge 1 können auch mittels der modularen Schwarmsteuereinheiten 6 untereinander über die zweiten Funkschnittstellen 8 kommunizieren, wobei jede Schwarmsteuereinheit 6 ihre zugehörige Flugsteuereinheit 3 entsprechend steuert und eine Bodenschwarmsteuereinheit 15 oder Ähnliches nicht notwendig ist. Zusätzlich können gegebenenfalls die Schwarmsteuereinheiten 6 Zugriff auf die Flugsteuereinheiten 3 der anderen Luftfahrzeuge 1 haben. Figur 3 zeigt ein derartiges System unbemannter Luftfahrzeuge 1 gemäß einer weiteren Ausgestaltung. Dabei gleichen die Luftfahrzeuge 1 im Wesentlichen den der ersten Ausgestaltung, mit der Ausnahme, dass in der modularen, in einem Gehäuse vorgesehenen Schwarmsteuereinheit 6 Zusatzeinheiten vorgesehen sind.

Im Beispiel in Figur 3 sind diese Zusatzeinheiten entweder ein LED-Leuchtmittel 17 oder ein LASER-Leuchtmittel 18. Alternativ und/oder zusätzlich können ein Lichtreflektor, eine Feuerwerksabschusseinrichtung, ein Raucherzeugungsmittel, ein Anzeigemittel, ein Lautsprecher, ein Mikrofon, ein optischer Sensor, insbesondere eine Kamera, eine Bilderkennungseinheit, ein Abstandssensor, ein Temperatursensor, ein Feuchtigkeitssensor, eine Transporteinheit für Waren und Pakete, usw. vorgesehen sein, wobei alle Kombinationen dieser Zusatzeinheiten mit einer erfindungsgemäßen modularen Schwarmsteuereinheit 6 denkbar sind.

Die Luftfahrzeuge 1 des Systems 10 können mittels der erfindungsgemäßen Schwarmsteuereinheiten 6, gemäß obiger Beschreibung, in einem Schwarmverbund bewegt werden. Mittels der Luftfahrzeuge 1, insbesondere mittels der LED-Leuchtmittel 17 und der LASER-Leuchtmittel 18, können so anhand von Abbildungsinformationen, die unter anderem die Positionsinformationen der Luftfahrzeuge 1 beinhalten, Abbildungen im Luftraum erzeugt werden. Figur 3 kann hierbei alternativ einen Ausschnitt eines Systems mit wesentlich mehr Luftfahrzeugen 1 darstellen, beispielsweise 100 und mehr Luftfahrzeuge 1. Hierdurch können, unter der vorteilhaften Verwendung der Schwarmsteuereinheiten 6 und einer großen Anzahl von im Schwarmflug gesteuerten Luftfahrzeugen 1, Abbildungen, beispielsweise groß angelegte und gut sichtbare Visualisierungen und Projektionen in Form dynamischer dreidimensionaler komplexer Figuren, die wiederverwendbar beziehungsweise im Wesentlichen abbildungsgleich wiederholbar, dynamisch und interaktiv sein können, bereitgestellt werden.

Optional kann zusätzlich zumindest ein Auto (nicht dargestellt) mit einer erfindungsgemäßen modularen Schwarmsteuereinheit 6 zum Kommunizieren mit den Schwarmsteuereinheiten 6 der Luftfahrzeuge 1 bodengebunden, im Schwarm mit den Luftfahrzeugen 1 vorgesehen sein. Hierbei können beispielsweise die Luftfahrzeuge 1 eine Abbildung, die das Auto bodengebunden "vorzeichnet", im Wesentlichen in Echtzeit im Luftraum "nachzeichnen".

Alternativ kann diesbezüglich zumindest ein Motorrad oder zumindest ein Wasserfahrzeug, insbesondere ein Boot oder ein Schiff, vorgesehen sein.

Es kann erwähnt werden, dass ein erfindungsgemäßes Luftfahrzeug oder System als Rettungssystem und/ oder Transportssystem, beispielsweise im Falle einer Katastrophe, oder als Informationssystem bei Sportveranstaltungen wie ein Fahrradrennen oder einem Marathon eingesetzt werden kann. Hierbei können beispielsweise mittels eines großen Schwarmverbunds von Luftfahrzeugen Hilfsgüter in großer Anzahl schnell und punktgenau geliefert werden. In einem Katastrophengebiet kann hierbei insbesondere eine parallele Lieferung an mehrere ausgewählte Positionen bereitgestellt werden, um so Verteilungsengpässe und kritische lokale Menschenansammlungen zu verhindern.

Der Begriff unbemanntes Luftfahrzeug ist im Rahmen dieser Erfindung sehr breit auszulegen und könnte beispielsweise auch Heißluftballone, Zeppeline, Modellflugzeuge oder Modellhubschrauber umfassen.

Eine weitere Einsatzmöglichkeit dieses Schwarmflugmodules liegt im Einsatz als "Transponder- und Blackbox-system" für jedes Luftfahrzeug, das mit dem Modul ausgestattet ist. Durch die im Schwarmmodul integrierte Speichereinheit, können Informationen wir Flugdauer, Flugposition, erreichte Geschwindigkeiten uvam. fortlaufend aufgezeichnet werden. Durch eine vorteilhafte Ausführung des wetterfesten Gehäuses, etwa als stoßfestes Gehäuse, kann die dort gespeicherte Information auch nach der Bergung, aufgrund eines mit einem Absturz endenden Zwischenfalls, ausgelesen werden und weiteren (technischen oder rechtlichen) Untersuchungen zur Verfügung stehen (Blackboxfunktionalität).

Darüber hinaus besteht durch die permanente Anbindung des Schwarmsteuermodules zur Bodenstation, auch die Möglichkeit mehrere Bodenstationen vorteilhaft so miteinander zu verbinden, dass die Übergabe eines mit einem erfindungsgemäßen Schwarmsteuermodul ausgestatteten Luftfahrzeuges zwischen zwei Bodenstationen während des Fluges, ermöglicht wird, ohne dabei die zuvor beschriebenen Sicherheitsvorkehrungen außer Kraft setzen zu müssen. Die Positionsinformation zu jedem einzelnen Schwarmsteuermodul bleibt dabei an der entsendenden Bodenstation erhalten (Transponderfunktion).

Jede Bodenstation, aus der ein mit einem erfindungsgemäßen Schwarmsteuermodul ausgestatteten Luftfahrzeug gestartet ist, kann die Hoheit über den nunmehr entfernten Flugpfad, des Luftfahrzeuges behalten und weiter, unter Berücksichtigung aller Sicherheitsvorkehrungen, verändern bzw. beeinflussen. Dies entspricht einer erfinderischen Erweiterung der Transponderfunktion in der Luftfahrt, hin zu einer Überwachungs- und Steuerungsmöglichkeit.

Besonders Vorteilhaft ausgeführt ist ein Netzwerk aus Bodenstationen, mit jeweils angekoppelten Schwarmsteuermodulen ausgeführt, wenn einer Autorität im Netzwerk (etwa einer Flugaufsichtsbehörde) der Durchgriff über im Netzwerk teilnehmende Bodenstationen, auf einzelne Schwarmsteuermodule ermöglicht wird.
Dadurch wird es dieser Autorität nicht nur möglich bestimmte festgelegte Auflagen für den Flugbetrieb zu erlassen, und diese zu überwachen, sondern es entsteht auch die Möglichkeit Maßnahmen (etwa das Sperren einer Flugzone für den UAV-Betrieb, im Fall eines Unglücks) unmittelbar und im Wesentlichen in Echtzeit, unter Einhaltung aller sicherheitsrelevanten Bedingungen (etwa sicheres autonomes Landen auf einer zugewiesenen Landeposition, jedes einzelnen betroffenen UAVs) zu erzwingen.

Daraus ergibt sich auch der vorteilhafte Einsatz eines Schwarmmodules im single-UAV-betrieb. Vor allem auch hinsichtlich der Möglichkeit, behördlich geforderte Berichte über den professionellen, geschäftsmäßigen Einsatz jedes einzelnen UAVs, automatisch aus der am Speichermodul des Schwarmsteuerungsmodules aufgezeichneten Fluginformation zu erstellen.

## Patentansprüche

1. Unbemanntes zum Einzelflug hergestelltes Luftfahrzeug (1) mit einer Antriebseinheit (2) zum Ermöglichen des Fluges des Luftfahrzeugs (1) im Luftraum und mit einer Flugsteuereinheit (3), die zum Empfangen von Steuerinformationen von einer Funkfernsteuerung oder zum Ansteuern von durch gespeicherte Positionsinformationen gekennzeichneten Positionen des Luftfahrzeugs (1) im Luftraum ausgebildet ist, um die Flugbahn des Luftfahrzeugs (1) zu steuern, **dadurch gekennzeichnet, dass** eine modulare in nur einem Gehäuse ausgebildete Schwarmsteuereinheit (6) vorgesehen ist, die eine erste Schnittstelle (7) zu der Flugsteuereinheit (3) und eine zweiten Funkschnittstelle (8) zu einer Bodenschwarmsteuereinheit (15) oder zu Schwarmsteuereinheiten (6) anderer Luftfahrzeuge (1) aufweist, wobei die Schwarmsteuereinheit (6) Signalerzeugungsmittel zum Erzeugen oder Sendemittel zum Senden von, der Funkfernsteuerung entsprechenden Steuerinformationen aufweist und über die erste Schnittstelle (7) zum Abgeben von für den Schwarmflug von zumindest zwei Luftfahrzeugen (1) relevanten Schwarmsteuerinformationen an die Flugsteuereinheit (3) ausgebildet ist.

2. Luftfahrzeug (1) gemäß Anspruch 1, **dadurch gekennzeichnet, dass** die erste Schnittstelle (7) durch eine kabelgebundene Schnittstelle mit den Signalerzeugungsmitteln gebildet ist, über welche kabelgebundene Schnittstelle die Schwarmsteuereinheit (6) mit der Funksteuereinheit entsprechend einem der folgenden Protokolle oder Konzepte kommuniziert: Micro Air Vehicle Communication Protocol; CAN-Bus Protocol; I2C; UART Anbindung; Emulation der Funkfernsteuerung.

3. Luftfahrzeug (1) gemäß Anspruch 1, **dadurch gekennzeichnet, dass** die erste Schnittstelle (7) als erste Funkschnittstelle mit den Sendemitteln ausgebildet ist.

4. Luftfahrzeug (1) gemäß einem der Ansprüche 1 bis 3, **dadurch gekennzeichnet, dass** die Schwarmsteuereinheit (6) Positionsbestimmungsmittel (9) zum Überwachen aufweist, ob sich das Luftfahrzeug (1) in einer vordefinierten Flugzone (12) aufhält, wobei die Schwarmsteuereinheit (6) zum Abgeben einer Schwarmsteuerinformation zur Vorgabe einer geänderten Flugbahn oder zur Korrektur der geplanten Flugbahn des Luftfahrzeugs (1) an die Flugsteuereinheit (3) ausgebildet ist, wenn Gefahr besteht, dass das Luftfahrzeug (1) die vordefinierte Flugzone (12) verlässt.

5. Luftfahrzeug (1) gemäß einem der Ansprüche 1 bis 4, **dadurch gekennzeichnet, dass** die Schwarmsteuereinheit (6) nach Empfang eines Sonderflugbefehls oder eines Heimkehrbefehls über die zweite Funkschnittstelle (8) von der Bodenschwarmsteuereinheit (15) zum Abgeben einer Schwarmsteuerinformation zur Vorgabe einer geänderten Flugbahn oder zur Korrektur der geplanten Flugbahn des Luftfahrzeugs (1) an die Flugsteuereinheit (3) ausgebildet ist, um das Luftfahrzeug (1) entlang einer vordefinierten Sonderflugbahn (14) und/ oder an eine vordefinierte Heimkehr-Landeposition (13) zu steuern.

6. Luftfahrzeug (1) gemäß einem der Ansprüche 1 bis 5, **dadurch gekennzeichnet, dass** die Schwarmsteuereinheit (6) Zeitmessmittel zum Ermitteln der Zeitdauer aufweist, während der keine ausreichende Funkverbindung zur Bodenschwarmsteuereinheit (15) gegeben war, wobei die Schwarmsteuereinheit (6) bei Überschreitung einer Maximalzeitdauer zum Abgeben einer Schwarmsteuerinformation zur Vorgabe einer geänderten Flugbahn oder zur Korrektur der geplanten Flugbahn des Luftfahrzeugs (1) an die Flugsteuereinheit (3) ausgebildet ist, um das Luftfahrzeug (1) innerhalb einer vordefinierten Flugzone (12) beziehungsweise ohne Überflug einer vordefinierten Sperrzone an eine vordefinierte Heimkehr-Landeposition (13) zu steuern.

7. Luftfahrzeug (1) gemäß einem der Ansprüche 1 bis 6, **dadurch gekennzeichnet, dass** in der modularen, in einem Gehäuse vorgesehenen Schwarmsteuereinheit (6) ein oder mehrere der folgenden Zusatzeinheiten vorgesehen sind: LED-Leuchtmittel (17); LASER-Leuchtmittel (18); Lichtreflektor; Feuerwerksabschusseinrichtung; Raucherzeugungsmittel; Anzeigemittel; Lautsprecher; Mikrofon; optischer Sensor, insbesondere Kamera; Bilderkennungseinheit; Abstandssensor; Temperatursensor; Feuchtigkeitssensor; Transporteinheit.

8. Luftfahrzeug (1) gemäß einem der Ansprüche 1 bis 7, **dadurch gekennzeichnet, dass** das Luftfahrzeug (1) als Drohne, insbesondere als Multicopter, ausgebildet ist.

9. System (10) zum Steuern von zumindest zwei unbemannten Luftfahrzeugen (1) in einem Schwarm, **dadurch gekennzeichnet, dass** die Luftfahrzeuge (1) mit modularen Schwarmsteuereinheiten (6) gemäß einem der Ansprüche 1 bis 8 und eine Bodenschwarmsteuereinheit (15) im System vorgesehen sind, wobei die Bodenschwarmsteuereinheit (15) über die zweiten Funkschnittstellen (8) der Schwarmsteuereinheiten (6) der Luftfahrzeuge (1) und deren erste Schnittstellen (7) zum Kommunizieren mit den Flugsteuereinheiten (3) der Luftfahrzeuge (1) ausgebildet ist und/oder die modularen Schwarmsteuereinheiten (6) untereinander zum Kommunizieren über die zweiten Funkschnittstellen (8) ausgebildet sind.

10. System (10) gemäß Anspruch 9, **dadurch gekennzeichnet, dass** zumindest zwei Luftfahrzeuge (1) unterschiedlicher Bauart, die jeweils eine modulare Schwarmsteuereinheit (6) aufweisen, in dem System (10) zum Schwarmflug vorgesehen sind.

11. System (10) gemäß einem der Ansprüche 9 oder 10, **dadurch gekennzeichnet, dass** zumindest ein Vehikel zur landgebundenen Bewegung, insbesondere ein Auto, oder zumindest ein Vehikel zur wassergebundenen Bewegung mit der mobilen Schwarmsteuereinheit (6) zum Kommunizieren mit der Bodenschwarmsteuereinheit (15) und/oder den Schwarmsteuereinheiten (6) der Luftfahrzeuge (1), bodengebunden im Schwarm mit im System (10) vorgesehenen Luftfahrzeugen (1) im Schwarmflug vorgesehen ist.

## Claims

1. An unmanned aircraft (1) produced for a single flight having a drive unit (2) for enabling the flight of the aircraft (1) in air space and having a flight control unit (3), which is configured to receive control information from a radio remote control or to control positions of the aircraft (1) in air space that are **characterized by** stored position information in order to control the flight course of the aircraft (1), **characterized in that**
there is provided a modular swarm control unit (6) formed only within a housing, which has a first interface (7) with the flight control unit (3) and a second radio interface (8) with a swarm ground control unit (15) or with swarm control units (6) of other aircrafts (1), wherein the swarm control unit (6) has signal generating means for generating or sending means for sending control information corresponding to the radio remote control and is configured to output, via the first interface (7), swarm control information relevant for the swarm formation flight of at least two aircrafts (1) to the flight control unit (3).

2. An aircraft (1) according to claim 1, **characterized in that** the first interface (7) is formed by a cable-bound interface with the signal generating means, via which cable-bound interface the swarm control unit (6) communicates with the radio control unit according to one of the following protocols or concepts: Micro Air Vehicle Communication Protocol; CAN Bus Protocol; I2C; UART connection; emulation of the radio remote control.

3. An aircraft (1) according to claim 1, **characterized in that** the first interface (7) is configured as a first radio interface with the sending means.

4. An aircraft (1) according to any of claims 1 to 3, **characterized in that** the swarm control unit (6) has position determining means (9) for monitoring whether the aircraft (1) is within a predefine flight zone (12), wherein the swarm control unit (6) is configured to output a swarm control information for specifying an altered flight course or for correcting the planned flight course of the aircraft (1) to the flight control unit (3) if there is given the danger that the aircraft (1) leaves the predefined flight zone (12).

5. An aircraft (1) according to any of claims 1 to 4, **characterized in that** the swarm control unit (6), upon receiving a special flight command or a return command via the second radio interface (8) from the swarm ground control unit (15), is configured to output a swarm control information for specifying an altered flight course or for correcting the planned flight course of the aircraft (1) to the flight control unit (3) in order to control the aircraft (1) along a predefined special flight course (14) and/or to a predefined return landing position (13).

6. An aircraft (1) according to any of claims 1 to 5, **characterized in that** the swarm control unit (6) has time measuring means for determining the period of time, during which there was not existent any sufficient radio connection with the swarm ground control unit (15), wherein the swarm control unit (6), upon exceeding a maximum period of time, is configured to output a swarm control information for specifying an altered flight course or for correcting the planned flight course of the aircraft (1) to the flight control unit (3) in order to control the aircraft (1) within a predefined flight zone (12) or without overflight of a predefined exclusion zone, respectively, to a predefined return landing position (13).

7. An aircraft (1) according to any of claims 1 to 6, **characterized in that** there are provided in the modular swarm control unit (6), which is provided within a housing, one or several of the following auxiliary units: LED light sources (17); LASER light sources (18); light reflecting device; fireworks launching device; smoke generating means; display means; loudspeakers; microphone; optical sensor, in particular camera; image recognition unit; space sensor; temperature sensor; moisture sensor; transporting unit.

8. An aircraft (1) according to any of claims 1 to 7, **characterized in that** the aircraft (1) is configured as a drone, in particular as a multicopter.

9. A system (10) for controlling at least two unmanned aircrafts (1) in a swarm flight formation, **characterized in that** the aircrafts (1) are provided with modular swarm control units (6) according to any of claims 1 to 8 and a swarm ground control unit (15) within the system, wherein the swarm ground control unit (15) is configured to communicate, via the second radio interfaces (8) of the swarm control units (6) of the aircrafts (1) and the first interfaces (7) thereof, with the flight control units (3) of the aircrafts (1) and/or the modular swarm control units (6) are configured to communicate with one another via the second radio interfaces (8).

10. A system (10) according to claim 9, **characterized in that** at least two aircrafts (1) having a different construction, which each have a modular swarm control unit (6), are provided in the system (10) for the swarm formation flight.

11. A system (10) according to any of claims 9 or 10, **characterized in that** at least one vehicle is provided for the land-bound movement, in particular a car, or at least one vehicle for the water-bound movement with the mobile swarm control unit (6) for communication with the swarm ground control unit (15) and/or the swarm control units (6) of the aircrafts (1), ground-bound within the swarm formation with aircrafts (1) provided in the system (10) in a swarm flight.

## Revendications

1. Aéronef sans pilote (1) fabriqué pour un vol unique, doté d'une unité de propulsion (2) pour permettre le vol de l'aéronef (1) dans l'espace aérien et d'une unité de commande de vol (3), qui est configurée de manière à recevoir des informations de commande d'une radiocommande distante ou pour commander des positions de l'aéronef (1) dans l'espace aérien **caractérisées par** des informations de position mémorisées, afin de commander la trajectoire de vol de l'aéronef (1), **caractérisé en ce qu'**il est prévu une unité de commande modulaire de vol en formation (6) formée dans un seul boîtier, et qui présente une première interface (7) vers l'unité de commande de vol (3) et une seconde interface radio (8) vers une unité de commande de vol en formation au sol (15) ou vers des unités de commande de vol en formation (6) d'autres aéronefs (1), dans lequel l'unité de commande de vol en formation (6) présente des moyens de production de signaux pour produire ou des moyens d'émission pour émettre des informations de commande correspondant à la radiocommande distante et est configurée de manière à délivrer à l'unité de commande de vol (3), par la première interface (7), des informations de commande de vol en formation pertinentes pour le vol en formation d'au moins deux aéronefs (1).

2. Aéronef (1) selon la revendication 1, **caractérisé en ce que** la première interface (7) est formée par une interface reliée par câble aux moyens de production de signaux, interface reliée par câble par laquelle l'unité de commande de vol en formation (6) communique avec l'unité de radiocommande selon un des protocoles ou concepts suivants: Micro Air Vehicle Communication Protocol; CAN-Bus Protocol; I2C; liaison UART; Émulation de la radiocommande distante.

3. Aéronef (1) selon la revendication 1, **caractérisé en ce que** la première interface (7) est réalisée comme première interface radio avec les moyens d'émission.

4. Aéronef (1) selon l'une quelconque des revendications 1 à 3, **caractérisé en ce que** l'unité de commande de vol en formation (6) présente des moyens de détermination de position (9) pour surveiller si l'aéronef (1) s'arrête dans une zone de vol prédéfinie (12), dans lequel l'unité de commande de vol en formation (6) est configurée de manière à délivrer une information de commande de vol en formation pour la prévision d'une trajectoire de vol modifiée ou pour la correction de la trajectoire de vol prévue de l'aéronef (1) à l'unité de commande de vol (3), lorsqu'il existe un risque que l'aéronef (1) quitte la zone de vol prédéfinie (12).

5. Aéronef (1) selon l'une quelconque des revendications 1 à 4, **caractérisé en ce que** l'unité de commande de vol en formation (6) est configurée de manière à, après réception d'un ordre de vol particulier ou d'un ordre de retour par la seconde interface (8) de l'unité de commande de vol en formation au sol (15), délivrer à l'unité de commande de vol (3), une information de commande de vol en formation pour la prévision d'une trajectoire modifiée ou pour la correction de la trajectoire de vol prévue de l'aéronef (1), afin de guider l'aéronef (1) le long d'une trajectoire de vol particulière prédéfinie (14) et/ou à une position d'atterrissage de retour prédéfinie (13).

6. Aéronef (1) selon l'une quelconque des revendications 1 à 5, **caractérisé en ce que** l'unité de commande de vol en formation (6) présente des moyens de mesure du temps, pour déterminer une durée pendant laquelle il n'a existé aucune liaison radio suffisante avec l'unité de commande de vol en formation au sol (15), dans lequel l'unité de commande de vol en formation (6) est configurée de manière à délivrer à l'unité de commande de vol (3), en cas de dépassement d'une durée maximale, une information de commande de vol en formation pour la prévision d'une trajectoire de vol modifiée ou pour la correction de la trajectoire de vol prévue de l'aéronef (1), afin de guider l'aéronef (1) à l'intérieur d'une zone de vol prédéfinie (12), ou pour le guider sans survol d'une zone d'arrêt prédéfinie jusqu'à une position d'atterrissage de retour prédéfinie (13).

7. Aéronef (1) selon l'une quelconque des revendications 1 à 6, **caractérisé en ce qu'**il est prévu, dans l'unité de commande modulaire de vol en formation (6), prévue dans un boîtier, une ou plusieurs des unités additionnelles suivantes: lampes LED (17); lampes LASER (18); réflecteur de lumière; dispositif de tir de feu d'artifice; moyens de production de fumée; moyens d'affichage; haut-parleur; microphone; détecteur optique, en particulier caméra; unité de reconnaissance d'image; télémètre; détecteur de température; détecteur d'humidité; unité de transport.

8. Aéronef (1) selon l'une quelconque des revendications 1 à 7, **caractérisé en ce que** l'aéronef (1) est constitué par un drone, en particulier un multicoptère.

9. Système (10) pour commander au moins deux aéronefs sans pilote (1) en une formation, **caractérisé en ce qu'**il est prévu dans le système les aéronefs (1) comprenant des unités de commande modulaires de vol en formation (6) selon l'une quelconque des revendications 1 à 8 et une unité de commande de vol en formation au sol (15), dans lequel l'unité de commande de vol en formation au sol (15) est configurée de manière à communiquer par les secondes interfaces radio (8) des unités de commande de vol en formation (6) des aéronefs (1) et leurs premières interfaces (7) avec les unités de commande de vol (3) des aéronefs (1), et/ou les unités de commande modulaires de vol en formation (6) sont configurées pour communiquer entre elles par les secondes interfaces radio (8).

10. Système (10) selon la revendication 9, **caractérisé en ce qu'**il est prévu dans le système (10) de vol en formation au moins deux aéronefs (1) de type différent, qui présentent chacun une unité de commande modulaire de vol en formation (6).

11. Système (10) selon la revendication 9 ou 10, **caractérisé en ce qu'**il est prévu au moins un véhicule à déplacement sur terre, en particulier une auto, ou au moins un véhicule à déplacement sur l'eau comprenant l'unité de commande mobile de vol en formation (6) pour communiquer avec l'unité de commande de vol en formation au sol (15) ou avec les unités de commande de vol en formation (6) des aéronefs (1), liés au sol en vol en formation avec des aéronefs (1) en vol en formation prévus dans le système (10).
